# EUROPÄISCHE PATENTANMELDUNG

(11) **EP 0 685 678 A1**
(43) Veröffentlichungstag der Anmeldung: **06.12.1995**
(21) Anmeldenummer: 94120931.4
(22) Anmeldetag: 30.12.1994
(51) Int. Cl.: F16L 37/48

(54) **Adapter für Wasserhähne**

(30) Priorität: 25.05.1994 DE 4418192
(71) Anmelder: Schmidt & Lenhardt GmbH & Co. oHG, D-88316 Isny (DE)
(72) Erfinder: Janisch, Klaus, D-88316 Isny (DE)
(74) Vertreter: Hübner, Hans-Joachim, Dipl.-Ing.

(57) **Zusammenfassung**

Ein Kupplungsstück (14), das an seinem unteren freien Ende einen äußeren Gewindeabschnitt (20) zum Aufschrauben eines Anschlußfittings (22) aufweist, hat ein Durchgangsloch (46), das oben in einem zylindrischen Einführungskanal (50) mündet, in das ein Mundstück (52) eines Wasserhahnes (18) paßt. Auf das Mundstück (14) wird ein Klemmstück (12) rechtwinklig zur Achse (42) des Mundstückes (14) aufgeschoben, wobei der Auslaufkopf (16) des Wasserhahnes (18) in eine Aufnahmekammer (34) des Klemmstückes (12) eintritt. Ein bodenseitiger Innenflansch (40) des Klemmstückes (12) erfaßt dabei eine Ringnut (48) des Kupplungsstückes (14). Mittels einer Klemmschraube (54) stützt sich das Klemmstück (12) an der Deckfläche des Auslaufkopfes (16) ab. Diese Schraube (54), wesentliche Teile des Klemmstückes (12) und das Kupplungsstück (14) liegen koaxial.
Mit dem Adapter (10) ist es möglich, gewindelose Auslaufköpfe (16) von Wasserhähnen (18) für den Gewindeanschluß von Anschlußfittings (22) geeignet zu machen.

## Beschreibung

Die Erfindung betrifft einen Adapter für Wasserhähne mit hohlem Auslaufkopf zum Anschließen einer Schlauchkupplung mit einem, ein Durchgangsloch aufweisenden Kupplungsstück, an dem ein im Querschnitt U-förmig ausgebildetes Klemmstück angreift, das den Auslaufkopf des Wasserhahnes mit seinem Joch übergreift, in welchem ein Gewindeloch ausgebildet ist, in dem eine Klemmschraube aufgenommen ist, die sich oben auf dem Auslaufkopf abstützt und dessen Schenkel mit ihren Enden das Kupplungsstück erfassen und dieses gegen den Mündungsrand des Auslaufkopfes spannen.

Ein Adapter dieser Art ist z.B. aus der US-3,419,044-A1 bekannt. Das Kupplungsstück besteht hier aus einem Ventilgehäuse, an dem zwei gelenkig miteinander verbundene U-Bügel angebracht sind, die das Klemmstück bilden. Die Mündungsöffnung des Kupplungsstückes und die Klemmschraube liegen versetzt, sodaß beim Anziehen der Schraube ein Kippmoment entsteht, das an der Verbindung zwischen Auslaufhahn und Kupplungsstück zu Abdichtungsproblemen führen kann.

Aus der US-1,197,230-A ist eine Vorrichtung zum lösbaren Kuppeln eines Kupplungsstückes an einen Wasserauslauf einer Wannen-Mischbatterie bekannt, bei der das Kupplungsstück eine Ringschulter aufweist, die von hakenförmigen Enden der Schenkel eines U-Bügels untergriffen werden, dessen Joch eine Klemmschraube trägt, die deckseitig auf den Auslaufkopf drückt. Das Kupplungsstück erlaubt nicht das Anschließen einer Schlauchleitung, sondern besteht aus einem Umschaltventil. Die hakenförmigen Enden der Bügelschenkel stützen das Kupplungsstück nur an zwei diametral gegenüberliegenden sehr kleinen Flächenabschnitten der Ringschulter ab. Eine druckdichte Verbindung ist nur bei sehr genauer, nämlich mittiger Positionierung des Klemmstückes am Kupplungsstück möglich. Beim Festziehen der Klemmschraube kann der Klemmbügel geringfügig verrutschen, sodaß beim anschließenden Aufbau des Wasserleitungsdruckes die Bügelschenkel von der Ringschulter des Kupplungsstückes abgleiten können.

Aufgabe der Erfindung ist es, einen Adapter zum Anschließen eines Druckwasserschlauches an Wasserhähne zu schaffen, der bei einfacher Montage und geringem Bauumfang Fehlpositionierungen seiner Teile zueinander und zum Wasserhahn sicher verhindert, ein sicheres Festklemmen gewährleistet und eine absolut dichte Verbindung auch dann garantiert, wenn die unter Druck stehende Schlauchleitung unabsichtlich angestoßen wird.

Diese Aufgabe wird erfindungsgemäß dadurch gelöst, daß die Schenke des Klemmstückes Teile einer ggf. unterbrochenen Umfangswand sind, die sich über einen Umfangswinkel von mehr als 180° erstreckt und eine Einschuböffnung aufweist, deren Breite mindestens gleich derjenigen des Auslaufkopfes ist, daß die Umfangswand eine Aufnahmekammer für den Auslaufkopf begrenzt, daß die Umfangswand bodenseitig einen Innenflansch aufweist, dessen Umfangserstreckung mehr als 180° beträgt und daß das Kupplungsstück eine, zu ihrem Durchgangsloch koaxiale äußere Ringschulter aufweist, mit der sich das Kupplungsstück auf dem Innenflansch des Klemmstückes abstützt.

Die Montage des Adapters am Wasserhahn ist äußerst einfach. Das Kupplungsstück wird mit einer Hand von unten gegen die Mündung des Auslaufkopfes gedrückt, wonach das Klemmstück von vorn auf den Auslaufkopf aufgeschoben wird. Dieses gleitet mit seinem Innenflansch an der Ringschulter des Kupplungsstückes bis zur vorderen Anlage an dieser entlang. Die Endposition wird ohne Anwendung von Aufmerksamkeit zwangsweise erreicht. Die Klemmschraube wird dann mit einigen Umdrehungen festgezogen. Bei heute üblichen Auslaufköpfen mit Perlatoreinsätzen ist das Kupplungsstück mit einem dazu passenden Bohrungsabschnitt versehen, sodaß das Kupplungsstück radial unbeweglich axial aufgeschoben und in Formschlußeingriff gebracht wird, Das Klemmstück trägt das Kupplungsstück längs einer Umfangserstreckung von etwa 270°. Dank dieser großflächigen Abstützung kann der Druckschlauch sogar zur Seite gebogen werden, ohne daß die dadurch auf die Verbindung zwischen Kupplungsstück und Wasserhahn ausgeübten Kräfte diese Verbindung lockern bzw. die Abdichtung beeinträchtigen. Solche Druckwasserschläuche werden z.B. benötigt, um Badelifter für Behinderte an die Haushaltswasserleitung anzuschließen. Mit demselben Adapter können aber auch Versorgungsschläuche für Waschmaschinen etc. gekuppelt werden. Der Adapter hat einen geringen Bauumfang, der nur wenige Millimeter größer zu sein braucht als der Durchmesser des Auslaufkopfes des Wasserhahnes. Dank der ringförmigen, nur im Bereich der Einschubbahn unterbrochenen Abstützung des Kupplungsstückes am Klemmstück, kann weder das Kupplungsstück verkantet, noch die notwendige Ringdichtung zwischen Kupplungsstück und Auslaufkopf ungleichmäßig verformt werden.

Mit dem Merkmal von Patentanspruch 3 wird der weitere Vorteil erreicht, daß das Kupplungsstück in seiner Kupplungsstellung am Klemmstück einen axialen Formschluß erhält, sodaß relative seitliche Verschiebungen ausgeschlossen sind. Es gibt nur eine einzige Kupplungsposition, sodaß Montagefehler ausgeschlossen sind. Dank der Zweiteiligkeit des Adapters können verschiedene Kupplungsstücke mit demselben Klemmstück formschlüssig gekuppelt werden, und da die einzelnen Kupplungsstücke an die Mündungsränder der verschiedenen Auslaufkopftypen, z.B. Perlatoreinsätze dadurch angepaßt sind, daß sie paßgenaue Einsenkungen aufweisen, wird auch das Kupplungsstück mit dem Auslaufkopf formschlüssig verbunden, sodaß zwischen letzterem und dem Klemmstück eine verschiebesichere Formschlußkupplung geschaffen wird.

Mit den Merkmalen von Anspruch 8 und 9 wird eine günstigere Krafteinleitung der Klemmschraube und/oder eine flächige Auflage der, vorn vorzugsweise mit einer relativ drehbaren Schutzscheibe versehenen Klemmschraube auf Wasserhähnen mit nach vorn abflachender Deckfläche ihrer Auslaufköpfe erreicht.

Anspruch 10 führt zu dem Vorteil, daß Deckwand und Umfangswand eine dünnwandige stabile Glocke bilden.

Anhand der Zeichnung, die Ausführungsbeispiele darstellt, wird die Erfindung näher beschrieben:
Es zeigt:
- FIG. 1: eine teilweise im Schnitt dargestellte Ausführungsform eines an einem Wasserhahn befestigten Adapters mit aufzuschraubendem Anschlußfitting,
- FIG. 2: eine Draufsicht auf den Adapter gemäß FIG. 1,
- FIG.3: eine Schnittansicht längs der Linie 3-3 der Figur 2,
- FIG. 4: eine vertikale Längsschnittansicht längs der Linie 4-4 der Figur 2,
- FIG. 5: eine Draufsicht auf eine etwas abgewandelte Ausführungsform eines Klemmstückes,
- FIG. 6: eine Querschnittsansicht längs der Linie 6-6 der Fig. 5, und
- FIG. 7: eine Längsschnittansicht längs der Linie 7-7 der FIG. 5.

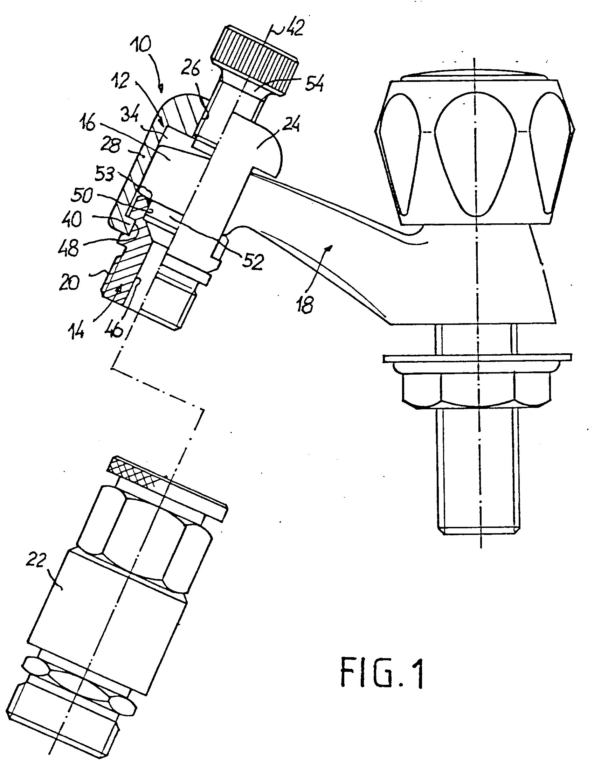

Der in Figur 1 mit 10 bezeichnete Adapter besteht aus einem Klemmstück 12 und einem Kupplungsstück 14 und ist an einem Auslaufkopf 16 eines Wasserhahnes 18 leicht abnehmbar befestigt. Das Kupplungsstück 14 weist einen äußeren Gewindeabschnitt 20 auf, auf dem ein Anschlußfitting 22 einer Schlauchleitung oder auch eine herkömmliche Schraubmuffe einer solchen Schlauchleitung aufschraubbar ist.

Das Klemmstück 12 hat eine Deckwand 24, die kreisförmig konturiert ist und ein koaxiales Gewindeloch 26 aufweist. An die Deckwand 24 schließt sich eine Umfangswand 28 an, die außen auf einer Kreiszylinderfläche liegt und sich über einen Umfangswinkel von etwa 240° erstreckt. Diese Umfangswand endet an zwei achsparallelen Rändern 30, an denen die Außenfläche und die Innenfläche der Umfangswand zusammenlaufen. Zwischen diesen beiden Rändern 30 wird eine Einschuböffnung 32 gebildet, die rechteckförmig konturiert ist.

Im Inneren des Klemmstückes 12 wird eine Aufnahmekammer 34 gebildet, die von einer halbzylindrischen Innenfläche 36 sowie zwei an diese jeweils anschließenden parallelen Anschlußflächen 38 besteht.

Bodenseitig schließt sich an die Umfangswand 28 ein Innenflansch 40 an, der sich in einer geometrischen Normalebene zur Achse 42 des Klemmstückes erstreckt. Der Innenflansch 40 begrenzt eine Bodenöffnung 44, die etwa in einer Hälfte halbkreisförmig konturiert ist und in der anderen Hälfte zwei geradlinig und parallel verlaufende Abschnitte aufweist. Die Achse des halbkreisförmig konturierten Abschnittes der Bodenöffnung, die Umfangswand 28 und die Gewindebohrung 26 liegen koaxial zur Achse 42 des Klemmstückes.

Das Kupplungsstück 14 ist drehteilgemäß ausgebildet, also innen und außen rotationssymmetrisch zur Achse 42. Das Kupplungsstück 14 ist hohl und hat ein koaxiales Durchgangsloch 46. In der oberen Hälfte des Kupplungsstückes 14 wird eine äußere Umfangsnut 48 gebildet, die zur Aufnahme des Innenflansches 40 des Klemmstückes 12 dient. Das Durchgangsloch 46 mündet am oberen Ende in einem durchmessermäßig vergrößerten Einführkanal 50, in den ein Mundstück 52 (Perlatoreinsatz) des Wasserhahnes 18 mit geringem Radialspiel hineinpaßt. Das Mundstück 52 ist kürzer als die axiale Länge dieses Einführkanals 50. Dieser hat am oberen Ende eine konische Erweiterung, in der ein Dichtring 53 aufgenommen ist. In der montierten Stellung des Adapters 10 liegt die obere Stirnfläche des Kupplungsstückes 14 an der zwischen Auslaufkopf 16 und Mundstück 52 gebildeten Ringfläche des Auslaufkopfes 16 an. Eine mit Rändelscheibe versehene Klemmschraube 54 stützt sich dabei auf der Oberseite des Auslaufkopfes 16 des Wasserhahnes 18 ab.

Nach Losschrauben der Klemmschraube 54 können das Klemmstück 12 nach vorn und danach das Kupplungsstück 14 nach unten abgezogen werden.

Die Montage des Adapters 10 erfordert die Montageschritte in umgekehrter Reihenfolge. Nachdem das Kupplungsstück 14 axial in Stellung gebracht worden ist, sodaß das Mundstück 52 in den Einführkanal 50 eintaucht, wird das Klemmstück 12 mit seinem Innenflansch 40 in die Umfangsnut 48 des Kupplungsstückes 14 eingeschoben, wobei die parallel verlaufenden Abschnitte des Innenflansches 40 als diametral gegenüberliegende Führungsrampen wirken, bis der halbkreisförmig konturierte Teil des Innenflansches 40 in die entsprechende Nut 48 eingetreten ist. Wenige Umdrehungen der Klemmschraube 54 genügen dann, um das Kupplungsstück über das Klemmstück 12 am Auslaufkopf 16 des Wasserhahnes 18 festzuklemmen.

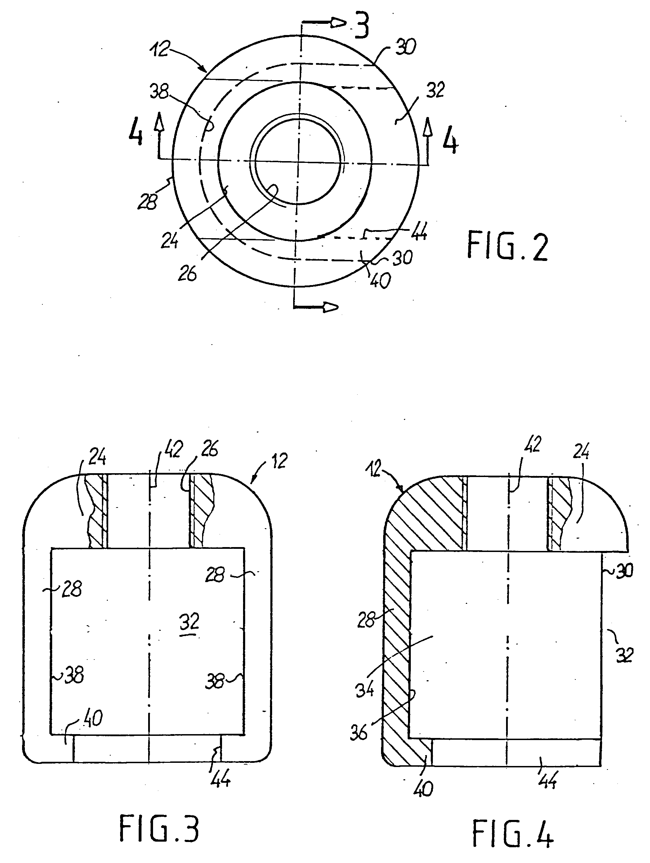

Für die Ausbildung des Adapters 10 gemäß Figuren 1-4 gilt, daß die Deckwand 24, der halbzylindrische Teil der Umfangswand 28 und das Kupplungsstück 14 koaxial zum Mundstück 52 des Wasserhahnes 18 und damit koaxial zur Achse 42 liegen.

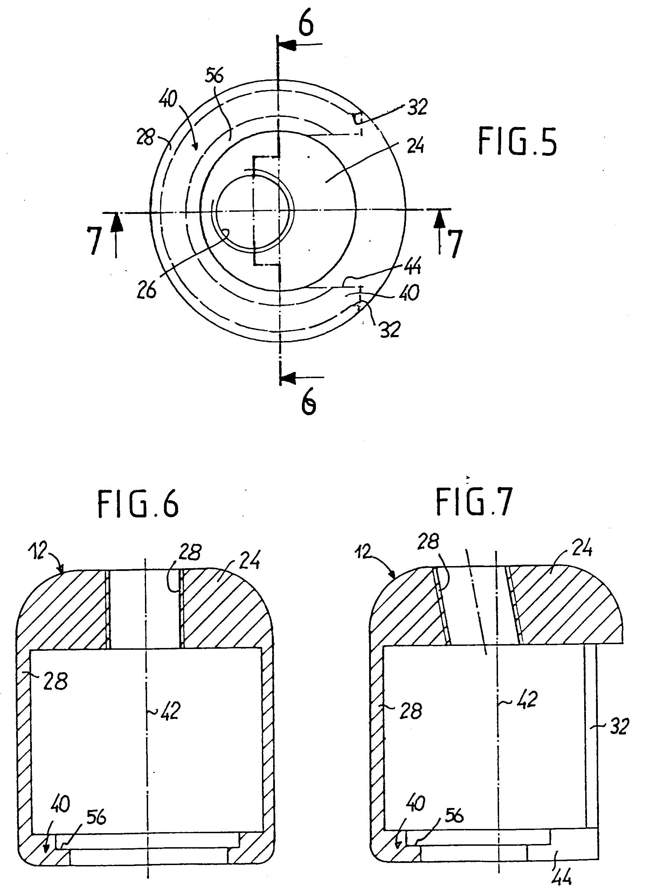

Die Variante gemäß Figuren 5-7 verwendet eine dünnwandigere Umfangswand 28, deren Umfangserstreckung etwa 270° beträgt. Der Innenflansch 40 weist eine, an seine Innenkontur anschließende kreisringförmige Vertiefung 56 auf, deren Umfangserstreckung etwas geringer als diejenige der Umfangswand 28 ist und etwa 260° beträgt. Die Ringbreite der Vertiefung 56 ist unter Beachtung einer Einsetztoleranz gleich der Breite der Ringschulter der Umfangsnut des Kupplungsstückes 14. Der Boden der Vertiefung 56 bildet eine Auflagefläche für die Ringschulter. Die Umfangsnut 48 des Kupplungsstückes hat - wie bei der vorbeschriebenen Ausführungsform eine Nutbreite mindestens gleich der Dicke des Innenflansches 40. Beim Aufschieben des Klemmstückes wird der Innenflansch 40 in der Umfangsnut 48 geführt bis die Endstellung erreicht ist, in der die Ringschulter koaxial fluchtend oberhalb der Vertiefung 56 liegt. Das Klemmstück kann nun axial um die Tiefe der Vertiefung 56 angehoben werden, womit die Bodenfläche der Vertiefung 56 an der Ringschulter zur Auflage kommt. Klemmstück 12 und Kupplungsstück 14 sind damit radial verschiebesicher verriegelt. Der Formschluß besteht im Bereich des Nutbodens des Kupplungsstückes 14 und/oder der Umfangsfläche der Vertiefung 56.

Das Gewindeloch 26 hat in der Ausführung gemäß Figuren 5-7 eine schräg liegende Achse, die mit der Achse 42 des Klemmstuckes 12 einen spitzen Winkel von etwa 10° bildet und letztere etwa in mittlerer Höhe der Aufnahmekammer 34 schneidet. Der größte Teil des Gewindeloches befindet sich - bezogen auf eine axiale Querebene des Klemmstückes - auf der der Einschuböffnung abgewandten vorderen Hälfte der Deckwand 24.

## Patentansprüche

1. Adapter für Wasserhähne (18) mit hohlem Auslaufkopf zum Anschließen einer Schlauchkupplung, mit einem, ein Durchgangsloch (46) aufweisenden Kupplungsstück (14), an dem ein, im Querschnitt U-förmig ausgebildetes Klemmstück (12) angreift, das den Auslaufkopf (16) des Wasserhahnes (18) mit seinem Joch (34) übergreift, in welchem ein Gewindeloch (26) ausgebildet ist, in dem eine Klemmschraube (54) aufgenommen ist, die sich oben auf dem Auslaufkopf (16) abstützt und dessen Schenke mit ihren Enden das Kupplungsstück (14) erfassen und dieses gegen den Mündungsrand des Auslaufkopfes (16) spannen, **dadurch gekennzeichnet, daß** die Schenke des Klemmstückes (14) Teile einer ggf. unterbrochenen Umfangswand (18) sind, die sich über einen Umfangswinkel von mehr als 180° erstreckt und eine Einschuböffnung (32) aufweist, deren Breite mindestens gleich derjenigen des Auslaufkopfes (16) ist, daß die Umfangswand (28) eine Aufnahmekammer (34) für den Auslaufkopf (16) begrenzt, daß die Umfangswand (28) bodenseitig einen Innenflansch (40) aufweist, dessen Umfangserstreckung mehr als 180° beträgt und daß das Kupplungsstück (14) eine, zu ihrem Durchgangsloch (46) koaxiale äußere Ringschulter (48) aufweist, mit der sich das Kupplungsstück (14) auf dem Innenflansch (40) des Klemmstückes (12) abstützt.

2. Adapter nach Anspruch 1, **dadurch gekennzeichnet, daß** die Ringschulter an einer Umfangsnut (48) des Kupplungsstückes (14) ausgebildet ist, in die der Innenflansch (40) des Klemmstückes (12) eingreift.

3. Adapter nach Anspruch 1 oder 2, **dadurch gekennzeichnet, daß** der Innenflansch (40) eine kreisringförmige Vertiefung (56), mit einer Ringbreite mindestens annähernd gleich der Breite der Ringschulter (48) des Kupplungsstückes (14) und einer Umfangserstreckung von mehr als 180° aufweist, und daß das Kupplungsstück (14) in seiner Montagestellung axial in die Vertiefung (56) eintaucht und radial unverschiebbar gehalten ist.

4. Adapter nach einem der Ansprüche 1 bis 3, **dadurch gekennzeichnet, daß** die Innenkontur des Innenflansches (40) sich aus einem Halbkreis und zwei an diesen anschließenden parallelen Geraden zusammensetzt, die bis in den Bereich der Einschuböffnung (32) reichen.

5. Adapter nach Anspruch 3 oder 4, **dadurch gekennzeichnet, daß** die Umfangserstreckung der kreisringförmigen Vertiefung (56) geringer als diejenige des Innenflansches (40) ist.

6. Adapter nach einem der Ansprüche 3 bis 5, **dadurch gekennzeichnet, daß** die Umfangserstreckung der kreisringförmigen Vertiefung (56) im Bereich von 210° und mindestens 240° liegt.

7. Adapter nach einem der Ansprüche 1 bis 6, **dadurch gekennzeichnet, daß** die Achse des Gewindeloches (26) in der mittleren lotrechten Axialebene des Klemmstückes (12) liegt, von der Achse (42) des Adapters (10) im Bereich des Joches (34) des Klemmstückes (12) beabstandet ist und - bezogen auf die Adapterache - auf der von der Einschuböffnung (32) abgewandten Jochseite (42) liegt.

8. Adapter nach einem der Ansprüche 1 bis 7, **dadurch gekennzeichnet, daß** die Achsen des Gewindeloches (26) und des Adapters (10) in einer rechtwinklig zur Ebene der Einschuböffnung (32) liegenden Axialebene des Adapters angeordnet sind, einen spitzen Winkel einschließen und einander im Bereich der Aufnahmekammer (34) schneiden.

9. Adapter nach einem oder mehreren der Ansprüche 1 bis 8, **dadurch gekennzeichnet, daß** das Joch (34) des Klemmstückes - abgesehen von dem Gewindeloch (26) - als mit der Umfangswand (28) einstückig verbundene geschlossene Deckwand ausgebildet ist.

10. Adapter nach Anspruch 9, **dadurch gekennzeichnet, daß** die Deckwand kreisförmig konturiert ist und die Einschuböffnung (32) überragt.
